# EUROPÄISCHE PATENTANMELDUNG

(11) **EP 3 515 033 A1**
(43) Veröffentlichungstag der Anmeldung: **24.07.2019**
(21) Anmeldenummer: 18152117.0
(22) Anmeldetag: 17.01.2018
(51) Int. Cl.: H04L 29/06, H04L 9/06, H04L 9/32

(54) **VERFAHREN UND VORRICHTUNG ZUM ÜBERTRAGEN EINES DATENSATZES VON EINER ERSTEN AN EINE ZWEITE EINRICHTUNG**

(71) Anmelder: Siemens Aktiengesellschaft, 80333 München (DE)
(72) Erfinder: Heintel, Markus, 81377 München (DE); Aschauer, Hans Dr., 81829 München (DE); Aydos, Gökçe, 81379 München (DE); Falk, Rainer Dr., 85586 Poing (DE); Fischer, Kai, 85598 Baldham (DE); Fries, Steffen, 85598 Baldham (DE); Klasen, Wolfgang Dr., 85521 Ottobrunn (DE); Pfau, Axel, 80333 München (DE); Zwanzger, Johannes Dr., 85579 Neubiberg (DE)

(57) **Zusammenfassung**

Verfahren zum Übertragen eines Datensatzes (D) von einer ersten an eine zweite Einrichtung (1, 2), umfassend:
Schützen (S1, S1') des Datensatzes (D) in der ersten Einrichtung (1) anhand eines Authenticated-Encryption-Verfahrens, in welchem eine Authentizität und/oder Integrität des Datensatzes (D) anhand eines vorbestimmten Authentisierungsgeheimnisses (8) geschützt wird und in welchem eine Vertraulichkeit des Datensatzes (D) anhand eines vorbestimmten Vertraulichkeitsgeheimnisses (9) geschützt wird,
wobei das Schützen des Datensatzes (D) derart erfolgt, dass der geschützte Datensatz (D) nur durch eine Einrichtung, in der ein dem vorbestimmten Vertraulichkeitsgeheimnis (9) zugehöriges Vertraulichkeitsgeheimnis (19) gespeichert ist, lesbar ist, und dass ein Schutz der Authentizität und/oder Integrität des geschützten Datensatzes (D) nur durch eine Einrichtung, in der ein dem vorbestimmten Authentisierungsgeheimnis (8) zugehöriges Authentisierungsgeheimnis (18) gespeichert ist, veränderbar und/oder überprüfbar ist.

Eine Einrichtung, z.B. ein Firewall, kann den Datensatz überprüfen, ohne dessen Authentizität und/oder Integrität zu kompromittieren.

## Beschreibung

Die vorliegende Erfindung betrifft ein Verfahren zum Übertragen eines Datensatzes von einer ersten an eine zweite Einrichtung sowie eine Vorrichtung zum Übertragen des Datensatzes von der ersten an die zweite Einrichtung.

Ein Datensatz, der zwischen mehreren Einrichtungen übertragen wird, kann sowohl vor Manipulationen als auch gegen Offenlegungen geschützt werden. Zum Schutz vor Manipulationen werden typischerweise Integritäts- und/oder Authentizitätsverfahren eingesetzt, während zum Schutz gegen Offenlegungen bzw. zum Schutz der Vertraulichkeit des Datensatzes häufig Verschlüsselungsverfahren eingesetzt werden.

Es ist bekannt, Authenticated-Encryption-Verfahren (AE-Verfahren) einzusetzen, die anhand eines einzigen Schlüssels ein zutreffendes Integritäts- und/oder Authentizitätsverfahren mit einem zutreffenden Verschlüsselungsverfahren kombinieren und somit einen Datensatz gleichzeitig sowohl vor Manipulationen als auch gegen Offenlegungen schützen können.

In einigen Anwendungen kann es gewünscht sein, dass eine privilegierte Instanz während der Datenübertragung einen Zugriff auf den Inhalt des Datensatzes erhält. Dies kann insbesondere notwendig sein, um die Integrität eines Automatisierungssystems zu überwachen oder um Steuerdaten durch einen Juridical Recorder aufzuzeichnen, sodass sie bei einem Schadensereignis zur Aufklärung der Ursache verfügbar sind. Die Offenlegung des verwendeten Schlüssels bei einem Authenticated-Encryption-Verfahren kann allerdings die Sicherheit des Datensatzes hinsichtlich seiner Integrität und/oder seiner Authentizität gefährden. Das heißt, die privilegierte Instanz soll nur einen Zugriff auf den Inhalt des Datensatzes erhalten, ohne jedoch in der Lage zu sein, den Inhalt des Datensatzes zu ändern.

Vor diesem Hintergrund besteht eine Aufgabe der vorliegenden Erfindung darin, ein verbessertes Übertragen eines Datensatzes von einer ersten an eine zweite Einrichtung zu schaffen.

Gemäß einem ersten Aspekt wird ein Verfahren zum Übertragen eines Datensatzes von einer ersten an eine zweite Einrichtung vorgeschlagen. Das Verfahren umfasst:
Schützen des Datensatzes in der ersten Einrichtung anhand eines Authenticated-Encryption-Verfahrens, in welchem eine Authentizität und/oder Integrität des Datensatzes anhand eines vorbestimmten Authentisierungsgeheimnisses geschützt wird und in welchem eine Vertraulichkeit des Datensatzes anhand eines vorbestimmten Vertraulichkeitsgeheimnisses geschützt wird,
wobei das Schützen des Datensatzes derart erfolgt, dass der geschützte Datensatz nur durch eine Einrichtung, in der ein dem vorbestimmten Vertraulichkeitsgeheimnis zugehöriges Vertraulichkeitsgeheimnis gespeichert ist, lesbar ist, und dass ein Schutz der Authentizität und/oder Integrität des geschützten Datensatzes nur durch eine Einrichtung, in der ein dem vorbestimmten Authentisierungsgeheimnis zugehöriges Authentisierungsgeheimnis gespeichert ist, veränderbar und/oder überprüfbar ist.

Die erste und die zweiten Einrichtung, im Folgenden auch "Einrichtungen", sind insbesondere Teil eines selben Netzwerks. Die Einrichtungen können Geräte eines Automatisierungsnetzwerks, wie zum Beispiel Steuereinrichtungen, Aktuatoren und/oder Sensoren, sein. Die Einrichtungen können auch unterschiedlichen Netzwerken zugehören.

Der Datensatz kann jegliche Daten umfassen, die zwischen der ersten und der zweiten Einrichtung zu übertragen sind. Der Datensatz umfasst beispielsweise Steuerdaten und/oder erfasste Sensordaten. Insbesondere handelt es sich bei dem Datensatz um einen sensiblen, vertraulichen Datensatz, dessen Inhalt nicht von unbefugten Einrichtungen und/oder Benutzern gelesen werden soll. Weiterhin handelt es sich bei dem Datensatz insbesondere um einen sensiblen, integritätsrelevanten Datensatz, dessen Inhalt nicht von unbefugten Einrichtungen und/oder Benutzern verändert werden soll.

Das Authenticated-Encryption-Verfahren (AE-Verfahren) dient insbesondere dazu, sowohl die Authentizität und/oder Integrität als auch die Vertraulichkeit des Datensatzes zu schützen, um den geschützten Datensatz zu erhalten. Die Authentizität des Datensatzes bezeichnet insbesondere die Echtheit des Datensatzes. Ein authentischer Datensatz bzw. authentisierter Datensatz kann zum Beispiel einer bestimmten Einrichtung oder einem bestimmten Sender zugeordnet werden. Das AE-Verfahren kann ein AES-GCM- ("advanced encryption standard Galois counter mode") oder ein AES-CCM-Verfahren ("advanced encryption standard counter with CBC-MAC mode") sein. Das AE-Verfahren kann weiterhin ein AES-EAX- ("advanced encryption standard counter with encrypt-then-authenticate-then-translate mode"), ein AES-SGCM- ("advanced encryption standard with Sophie Germain counter mode"), ein AES-CWC- ("advanced encryption standard counter with Carter-Wegman counter mode") oder ein AES-OCB-Verfahren ("advanced encryption standard with offset codebook mode") sein.

Unter der Integrität des Datensatzes wird insbesondere verstanden, dass der Inhalt des Datensatzes vollständig ist und/oder nicht unbefugt modifiziert wurde. Weiterhin kann darunter verstanden werden, dass ein Datensatz aktuell ist.

Die Vertraulichkeit des Datensatzes kann eine Eigenschaft des Datensatzes sein, nur für einen bestimmten Empfänger bzw. nur für eine bestimmte Empfängergruppe vorgesehen/lesbar zu sein. Der Schutz der Vertraulichkeit kann auch als Schutz vor dem Verlust der Vertraulichkeit oder Schutz vor der Offenlegung des Datensatzes bezeichnet werden. Zum Schutz der Vertraulichkeit kann der Datensatz verschlüsselt werden.

In dem hier beschriebenen AE-Verfahren werden zwei unterschiedliche Geheimnisse eingesetzt, wobei das Authentisierungsgeheimnis insbesondere lediglich zum Schutz der Authentizität und/oder Integrität des Datensatzes dient, und wobei das Vertraulichkeitsgeheimnis insbesondere lediglich zum Schutz der Vertraulichkeit des Datensatzes dient. Durch Anwenden des AE-Verfahrens kann ein Datensatz erhalten werden, der sowohl im Hinblick auf Authentizität und/oder Integrität als auch im Hinblick auf Vertraulichkeit geschützt ist.

Die Nutzung des AE-Verfahren weist insbesondere den Vorteil auf, dass dabei das Verfahren zum Schutz der Authentizität und/oder Integrität mit dem Verfahren zum Schutz der Vertraulichkeit derart kombiniert wird, dass keines der beiden Verfahren durch das andere geschwächt wird. Dadurch kann der geschützte Datensatz gegen Angriffe geschützt werden, die auf ungünstige Kombinationen der einzelnen Verfahren beruhen, wie es zum Beispiel beim Padding-Orakel der Fall ist.

Das Authentisierungsgeheimnis, welches auch als Authentizitäts- und/oder Integritätsgeheimnis bezeichnet werden kann, ist insbesondere ein kryptographischer Schlüssel. Dieser kryptographische Schlüssel kann beispielsweise zur Berechnung eines Message Authentication Codes (MAC) verwendet werden. Das Vertraulichkeitsgeheimnis kann zum Beispiel ein kryptographischer Schlüssel sein, mit dem der Datensatz verschlüsselt wird. Bei jedem der kryptographischen Schlüssel kann es sich sowohl um einen öffentlichen als auch um einen privaten Schlüssel handeln.

Der anhand des AE-Verfahrens geschützte Datensatz ist insbesondere derart geschützt, dass nur eine Einrichtung, die ein dem vorbestimmten Vertraulichkeitsgeheimnis zugehöriges Vertraulichkeitsgeheimnis aufweist, lesbar ist. Unter lesbar kann auch entschlüsselbar verstanden werden. Insbesondere kann nur eine Einrichtung, die das zugehörige Vertraulichkeitsgeheimnis aufweist, den Inhalt des Datensatzes lesen.

Das heißt, dass eine Offenlegung des Datensatzes nur durch Einrichtungen, die das zugehörige Vertraulichkeitsgeheimnis aufweisen, möglich ist.

Das zugehörige Vertraulichkeitsgeheimnis bildet insbesondere mit dem vorbestimmten Vertraulichkeitsgeheimnis ein kryptographisches Schlüsselpaar. Das zugehörige Vertraulichkeitsgeheimnis kann unterschiedlich oder identisch zu dem vorbestimmten Vertraulichkeitsgeheimnis sein.

Der anhand des AE-Verfahrens geschützte Datensatz ist zudem insbesondere derart geschützt, dass nur eine Einrichtung, die ein dem vorbestimmten Authentisierungsgeheimnis zugehöriges Authentisierungsgeheimnis aufweist, den Schutz der Authentizität und/oder Integrität des Datensatzes verändern, modifizieren oder überprüfen kann. Insbesondere ist nur eine Einrichtung, die das zugehörige Authentisierungsgeheimnis aufweist, in der Lage, den MAC des Datensatzes zu verändern, einen neuen MAC zu erzeugen und/oder den aktuellen MAC zu verifizieren. In einer Variante ist es möglich, dass das Vertraulichkeitsgeheimnis neben der Verschlüsselung bzw. Entschlüsselung des Datensatzes verwendet wird, um eine zweite MAC-Prüfsumme zu berechnen bzw. zu prüfen. Dies hat den Vorteil, dass auch eine Einheit, die lediglich über das Vertraulichkeitsgeheimnis verfügt, eine zweite Integritätsprüfsumme generieren bzw. überprüfen kann.

Das zugehörige Authentisierungsgeheimnis kann unterschiedlich oder identisch zu dem vorbestimmten Authentisierungsgeheimnis sein.

Eine Einrichtung, die das zugehörige Vertraulichkeitsgeheimnis aufweist, aber das zugehörige Authentisierungsgeheimnis nicht kennt, kann insbesondere den Inhalt des Datensatzes lesen, diesen aber nicht unauffällig verändern, weil sie den Schutz der Authentizität und/oder Integrität des Datensatzes nicht verändern kann. Dadurch kann insbesondere verhindert werden, dass solch eine Einrichtung auf unzulässige Weise den Datensatz abändert und/oder dessen Authentizität- und/oder Integritätsschutz verändert oder aufhebt. Dadurch kann sichergestellt werden, dass solch eine Einrichtung passiv den Datensatz lesen kann, aber ohne diesen modifizieren zu können. Dadurch kann die Integrität des Datensatzes gewährleistet werden.

Eine Einrichtung, die das zugehörige Authentisierungsgeheimnis aufweist aber das zugehörige Vertraulichkeitsgeheimnis nicht kennt, kann insbesondere den Inhalt des Datensatzes nicht lesen, aber den Schutz der Authentizität und/oder Integrität des Datensatzes prüfen. Auch dadurch kann die Vertraulichkeit des Datensatzes erhöht werden.

Es müssen insbesondere zwei Geheimnisse (das zugehörige Vertraulichkeitsgeheimnis und das zugehörige Authentisierungsgeheimnis) in einer selben Einrichtung vorliegen, damit diese den Datensatz lesen und modifizieren kann. Eine Einrichtung, die nur eines der Geheimnisse kennt, kann insbesondere nur beschränkt mit dem Datensatz agieren.

Gemäß einer Ausführungsform umfasst das Verfahren ferner ein Übertragen des geschützten Datensatzes von der ersten an die zweite Einrichtung, wobei das zugehörige Vertraulichkeitsgeheimnis und das zugehörige Authentisierungsgeheimnis in der zweiten Einrichtung gespeichert sind.

Dadurch, dass die zweite Einrichtung sowohl das zugehörige Vertraulichkeitsgeheimnis als auch das zugehörige Authentisierungsgeheimnis aufweist, ist sie insbesondere eine verlässige Einrichtung, die frei mit dem Datensatz verfügen kann.

Gemäß einer weiteren Ausführungsform umfasst das Verfahren ferner ein
Lesen des Datensatzes durch eine dritte Einrichtung, wobei das zugehörige Vertraulichkeitsgeheimnis in der dritten Einrichtung gespeichert ist, und wobei das zugehörige Authentisierungsgeheimnis nicht in der dritten Einrichtung gespeichert ist.

Die dritte Einrichtung ist insbesondere eine passive Einrichtung, die lediglich zum Lesen des Datensatzes autorisiert ist. Die dritte Eirichtung kann zum Beispiel die Authentizität und/oder Integrität des Datensatzes nicht unbemerkt verändern, weil sie das zugehörige Authentisierungsgeheimnis nicht aufweist.

Die dritte Einrichtung kann entlang eines Kommunikationskanals für den Datensatz zwischen der ersten und der zweiten Einrichtung angeordnet sein. Die dritte Einrichtung kann insbesondere alle zwischen der ersten und der zweiten Einrichtung übertragenen Datensätze abfangen und lesen. Dieses kann im Rahmen einer Kontrolle der Datensätze erfolgen. Die dritte Einrichtung kann ein Zwischenknoten zum Untersuchen des Datensatzes auf Schadsoftware sein.

Die Authentizität und/oder Integrität des Datensatzes gilt insbesondere Ende-zu-Ende, also von der ersten bis zu der zweiten Einrichtung, auch wenn der Datensatz durch die dritte Einrichtung gelesen wird.

Gemäß einer weiteren Ausführungsform ist das vorbestimmte Authentisierungsgeheimnis unabhängig von dem vorbestimmten Vertraulichkeitsgeheimnis. Das vorbestimmte Authentisierungsgeheimnis ist insbesondere nicht mit dem vorbestimmten Vertraulichkeitsgeheimnis verknüpft. Das vorbestimmte Authentisierungsgeheimnis wird zum Beispiel unabhängig von dem vorbestimmten Vertraulichkeitsgeheimnis erzeugt.

Gemäß einer weiteren Ausführungsform werden das vorbestimmte Authentisierungsgeheimnis und das vorbestimmte Vertraulichkeitsgeheimnis von einem gemeinsamen Ausgangsgeheimnis abgeleitet.

Gemäß einer weiteren Ausführungsform wird das vorbestimmte Authentisierungsgeheimnis von dem vorbestimmten Vertraulichkeitsgeheimnis abgeleitet.

Gemäß einer weiteren Ausführungsform werden das vorbestimmte Authentisierungsgeheimnis und das vorbestimmte Vertraulichkeitsgeheimnis von zwei separaten Geheimnisvereinbarungsprotokollsitzungen vereinbart. Dazu kann ein einziges Authentisierungs- und Schlüsselvereinbarungsprotokoll verwendet werden, oder es können unterschiedliche Authentisierungs- und Schlüsselvereinbarungsprotokoll verwendet werden. Bei beiden Protokollsitzungen kann das gleiche Long-Term-Credential verwendet werden, oder es können unterschiedliche Long-Term-Credentials verwendet werden.

Gemäß einer weiteren Ausführungsform werden das vorbestimmte Vertraulichkeitsgeheimnis und/oder das vorbestimmte Authentisierungsgeheimnis im Rahmen eines Authentisierungs- und Schlüsselvereinbarungsprotokolls zwischen der ersten und der zweiten Einrichtung eingerichtet, wobei das Schlüsselvereinbarungsprotokoll insbesondere ein TLS-Handschake und/oder ein IKEv2-Protokoll ist.

Gemäß einer weiteren Ausführungsform wird das vorbestimmte Authentisierungsgeheimnis und/oder das vorbestimmte Vertraulichkeitsgeheimnis anhand einer Schlüsselableitungsfunktion, insbesondere anhand einer HMAC-SHA256-Funktion (Hash-based message authentication code) oder einer HKDF-Funktion (Hash key derivation function), bestimmt.

Gemäß einer weiteren Ausführungsform ist das AE-Verfahren ein GCM-Verfahren (Galois-Counter-Modus), ein AES-GCM- (advanced encryption standard Galois-Counter mode) oder ein AES-CCM-Verfahren (advanced encryption standard counter with CBC-MAC mode). Das AE-Verfahren kann weiterhin ein AES-EAX-("advanced encryption standard counter with encrypt-then-authenticate-then-translate mode"), ein AES-SGCM- ("advanced encryption standard with Sophie Germain counter mode"), ein AES-CWC- ("advanced encryption standard counter with Carter-Wegman counter mode") oder ein AES-OCB-Verfahren ("advanced encryption standard with offset codebook mode") sein.

Gemäß einer weiteren Ausführungsform umfasst das Verfahren ferner:
Bestimmen eines Authentifikations-Tags durch die erste Einrichtung mit Hilfe eines modifizierten GCM-Verfahrens (Galois-Counter-Modus), wobei das vorbestimmte Vertraulichkeitsgeheimnis in dem modifizierten GCM-Verfahren verwendet wird, um den Datensatz zu einem Ciphertext zu verschlüsseln, und wobei der Authentifikations-Tag in dem modifizierten GCM-Verfahren mit dem vorbestimmten Authentisierungsgeheimnis geschützt wird;
Übertragen des Authentifikations-Tags zusammen mit dem geschützten Datensatz von der ersten Einrichtung an die zweite Einrichtung;
Prüfen und Entschlüsseln des Datensatzes ausgehend von dem Ciphertext durch die zweite Einrichtung unter Berücksichtigung des Ciphertexts, des Authentifikations-Tags, des in der zweiten Einrichtung gespeicherten zugehörigen Vertraulichkeitsgeheimnisses und des in der zweiten Einrichtung gespeicherten zugehörigen Authentisierungsgeheimnisses.

Das modifizierte GCM-Verfahren kann ein Beispiel für ein AE-Verfahren sein. Die erste Einrichtung kann das vorbestimmte Authentisierungsgeheimnis und das vorbestimmte Vertraulichkeitsgeheimnis im Rahmen des modifizierten GCM-Verfahrens verwenden, um den Authentifikations-Tag abzuleiten. Insbesondere handelt es sich bei dem Authentifikations-Tag um einen datensatzspezifischen Authentifikations-Tag.

Der Datensatz kann anhand des modifizierten GCM-Verfahrens geschützt werden. Der Datensatz kann im Rahmen des modifizierten GCM-Verfahrens z.B. anhand des vorbestimmten Vertraulichkeitsgeheimnisses verschlüsselt werden. Der verschlüsselte Datensatz bildet insbesondere einen Ciphertext, welcher auch als Geheimtext oder Chiffrat bezeichnet werden kann.

Das modifizierte GCM-Verfahren unterscheidet sich insbesondere von einem klassischen, bekannten GCM-Verfahren dadurch, dass sowohl das vorbestimmte Authentisierungsgeheimnis als auch das vorbestimmte Vertraulichkeitsgeheimnis als Eingangsdaten in das modifizierte GCM-Verfahren einfließen können.

Der berechnete Authentifikations-Tag kann an die zweite Einrichtung übertragen werden. Die zweite Einrichtung kann insbesondere anhand des Authentifikations-Tags und/oder der zugehörigen Authentisierungs- und Vertraulichkeitsgeheimnisse die Authentizität und/oder Integrität des empfangenen Datensatzes überprüfen, d.h. den empfangenen Datensatz prüfen. Hierzu überprüft die zweite Einrichtung insbesondere, ob der empfangene Authentifikations-Tag tatsächlich anhand der vorbestimmten Authentisierungs- und Vertraulichkeitsgeheimnisse erzeugt wurde. Falls dieses der Fall ist, kann die zweite Einrichtung bestimmen, dass die Authentizität und/oder Integrität des Datensatzes gegeben ist. Zum Entschlüsseln des empfangenen Datensatzes verwendet die zweite Einrichtung insbesondere das zugehörige Vertraulichkeitsgeheimnis.

Gemäß einer weiteren Ausführungsform ist die dritte Einrichtung als eine Firewall, ein IDS-System (intrusion detection system), ein Log-Server, ein zugelassenes Überwachungssystem und/oder ein virtueller Sensor zur Extraktion von Sensordaten aus dem Datenstrom ausgebildet ist.

Das IDS-System kann auch als ein Angriffserkennungssystem bezeichnet werden. Die dritte Einrichtung ist insbesondere eine spezielle privilegierte Einrichtung, die einen Zugriff auf den Inhalt des Datensatzes benötigt. Dieser Zugriff kann zum Beispiel dazu dienen, die übertragenen Datensätze im Hinblick auf vorbestimmte Sicherheitsvoraussetzungen zu überprüfen.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem zweiten Aspekt wird eine Vorrichtung zum Übertragen eines Datensatzes von einer ersten an eine zweite Einrichtung vorgeschlagen. Die Vorrichtung umfasst:
eine Schutzeinheit zum Schützen des Datensatzes in der ersten Einrichtung anhand eines Authenticated-Encryption-Verfahrens, in welchem eine Authentizität und/oder Integrität des Datensatzes anhand eines vorbestimmten Authentisierungsgeheimnisses geschützt wird und in welchem eine Vertraulichkeit des Datensatzes anhand eines Vertraulichkeitsgeheimnisses geschützt wird,
wobei das Schützen des Datensatzes derart erfolgt, dass der geschützte Datensatz nur durch eine Einrichtung, in der ein dem vorbestimmten Vertraulichkeitsgeheimnis zugehöriges Vertraulichkeitsgeheimnis gespeichert ist, lesbar ist, und dass die Authentizität und/oder Integrität des geschützten Datensatzes nur durch eine Einrichtung, in der ein dem vorbestimmten Authentisierungsgeheimnis zugehöriges Authentisierungsgeheimnis gespeichert ist, veränderbar und/oder überprüfbar ist.

Die Schutzeinheit kann hardwaretechnisch und/oder auch softwaretechnisch implementiert sein. Bei einer hardwaretechnischen Implementierung kann die Schutzeinheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die Schutzeinheit als Computerprogrammprodukt, als eine Funktion, als eine Routine, als Teil eines Programmcodes oder als ausführbares Objekt ausgebildet sein.

In Ausführungsformen ist die Vorrichtung gemäß dem zweiten Aspekt geeignet, das Verfahren gemäß dem ersten Aspekt oder gemäß einer Ausführungsform des ersten Aspekts durchzuführen.

Die für das vorgeschlagene Verfahren beschriebenen Ausführungsformen und Merkmale gelten für die vorgeschlagene Vorrichtung entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt eine Vorrichtung zum Übertragen eines Datensatzes von einer ersten an eine zweite Einrichtung gemäß einer ersten Ausführungsform;
Fig. 2 zeigt ein Verfahren zum Übertragen eines Datensatzes von einer ersten an eine zweite Einrichtung gemäß einer ersten Ausführungsform;
Fig. 3 zeigt eine Vorrichtung zum Übertragen eines Datensatzes von einer ersten an eine zweite Einrichtung gemäß einer zweiten Ausführungsform;
Fig. 4 zeigt ein Beispiel für eine dritte Einrichtung;
Fig. 5 zeigt ein Verfahren zum Übertragen eines Datensatzes von einer ersten an eine zweite Einrichtung gemäß einer zweiten Ausführungsform;
Fig. 6 zeigt ein Verfahren zum Übertragen eines Datensatzes von einer ersten an eine zweite Einrichtung gemäß einer dritten Ausführungsform;
Fig. 7 zeigt ein erstes Beispiel für ein modifiziertes Galois-Counter-Modus-Verfahren; und
Fig. 8 zeigt ein zweites Beispiel für ein modifiziertes Galois-Counter-Modus-Verfahren.

In den Figuren sind gleiche oder funktionsgleiche Elemente mit denselben Bezugszeichen versehen worden, sofern nichts anderes angegeben ist.

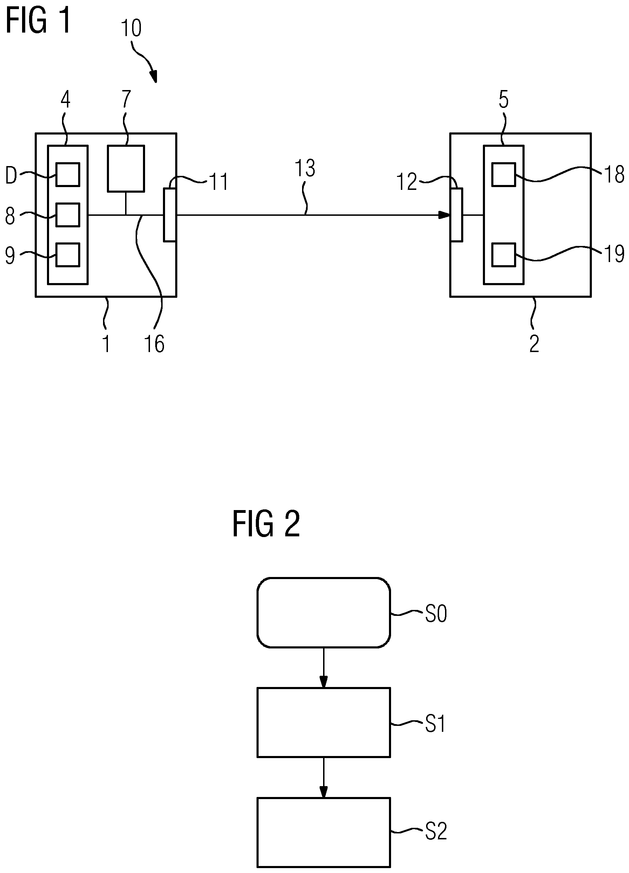

Die Fig. 1 zeigt eine Vorrichtung 10 zum Übertragen eines Datensatzes D von einer ersten an eine zweite Einrichtung 1, 2 gemäß einer ersten Ausführungsform. Die erste Einrichtung 1 ist eine Überwachungseinrichtung zum Überwachen eines Banktresors. Im Rahmen der Überwachung erzeugt die Überwachungseinrichtung 1 Überwachungsdaten, welche als Datensätze D an die zweite Einrichtung 2 übertragen werden. Die zweite Einrichtung 2 ist eine Verarbeitungseinrichtung, die die empfangenen Datensätze analysiert, um z.B. ein Eindringen einer Person in den Banktresor zu erkennen.

Aufgrund der Relevanz der Datensätze D ist es wichtig, dass diese bei der Übertragung an die zweite Einrichtung 2 geschützt werden und nicht modifiziert werden können. Hierzu weist die erste Einrichtung 1 eine erste Speichereinheit 4 und eine Schutzeinheit 7 auf, welche über eine interne Verbindung 16 miteinander verbunden sind.

Die Speichereinheit 4 ist ein RAM-Speicher, in dem der Datensatz D, ein vorbestimmtes Authentisierungsgeheimnis 8 und ein vorbestimmtes Vertraulichkeitsgeheimnis 9 gespeichert sind. Das vorbestimmte Authentisierungsgeheimnis 8 ist beispielsweise ein kryptographischer Schlüssel, der zur Berechnung eines MACs oder eines Authentisierungs-Tags verwendet werden kann. Das vorbestimmte Authentisierungsgeheimnis 8 wird zum Schutz der Authentizität und Integrität des Datensatzes D eingesetzt. Der MAC kann z.B. durch die erste Einrichtung 1 selbst erzeugt werden und datensatzspezifisch sein.

Das vorbestimmte Vertraulichkeitsgeheimnis 9 ist ein kryptographischer Schlüssel, der zum Schutz der Vertraulichkeit des Datensatzes D verwendet werden kann, um den Datensatz D zu verschlüsseln. Auch das vorbestimmte Vertraulichkeitsgeheimnis 9 kann durch die erste Einrichtung 1 selbst erzeugt werden und datensatzspezifisch sein. Um die Vertraulichkeit des Datensatzes D zu schützen, wird der Datensatz D mit dem kryptographischen Schlüssel 9 verschlüsselt.

Die Schutzeinheit 7 ist geeignet, in einem AE-Verfahren sowohl die Authentizität und Integrität als auch die Vertraulichkeit des Datensatzes D zu schützen. Hierzu greift die Schutzeinheit 7 auf das vorbestimmte Authentisierungsgeheimnis 8 und auf das vorbestimmte Vertraulichkeitsgeheimnis 9 zu.

Die Schutzeinheit 7 schützt den Datensatz D derart, dass der Inhalt des geschützten Datensatzes D nur mit einem dem vorbestimmten Vertraulichkeitsgeheimnis 9 zugehörigen Vertraulichkeitsgeheimnis 19 abgelesen werden kann. Das zugehörige Vertraulichkeitsgeheimnis 19 ist dabei ein kryptographischer Schlüssel, der dem vorbestimmten Vertraulichkeitsgeheimnis 9 gleich ist. Die kryptographischen Schlüssel 9, 19 sind somit geheime Schlüssel, die in einem symmetrischen Ver- und Entschlüsselungsverfahren eingesetzt werden können. Das Vertraulichkeitsgeheimnis 9 und das zugehörige Vertraulichkeitsgeheimnis 19 werden im Rahmen eines Authentisierungs- und Schlüsselvereinbarungsprotokolls zwischen der ersten und der zweiten Einrichtung 1, 2 vereinbart.

Ferner kann die Authentizität und/oder Integrität des geschützten Datensatzes D nur mit einem dem vorbestimmten Authentisierungsgeheimnis 8 zugehörigen Authentisierungsgeheimnis 18 verändert werden. Das zugehörige Authentisierungsgeheimnis 18 ist dabei ein Authentisierungsgeheimnis, welches parallel zu dem vorbestimmten Authentisierungsgeheimnis 8 erzeugt wird. Das Authentisierungsgeheimnis 8 und das zugehörige Authentisierungsgeheimnis 18 werden im Rahmen eines Authentisierungs- und Schlüsselvereinbarungsprotokolls zwischen der ersten und der zweiten Einrichtung 1, 2 vereinbart. Das zugehörige Authentisierungsgeheimnis 18 ist dabei ein kryptographischer Schlüssel, der dem vorbestimmten Authentisierungsgeheimnis 8 gleich ist. Die kryptographischen Schlüssel 8, 18 sind somit geheime Schlüssel, die beispielsweise zur Berechnung eines MAC verwendet werden können.

In der in der Fig. 1 dargestellten Vorrichtung 10 sind das zugehörige Authentisierungsgeheimnis 18 und das zugehörige Vertraulichkeitsgeheimnis 19 in einer zweiten Speichereinheit 5 der zweiten Einrichtung 2 gespeichert. Das zugehörige Authentisierungsgeheimnis 18 und das zugehörige Vertraulichkeitsgeheimnis 19 ermöglichen der zweiten Einrichtung 2, den geschützten Datensatz D zu lesen und einen Schutz der Authentizität und/oder Integrität des Datensatzes D zu verändern. Die zweite Einrichtung 2 kann als eine verlässige Einrichtung betrachtet werden, die den Datensatz D frei verwenden darf.

Zur Übertragung des Datensatzes D von der ersten Einrichtung 1 an die zweite Einrichtung 2 ist die erste Einrichtung 1 mit einer ersten Schnittstelle 11 und die zweite Einrichtung 2 mit einer zweiten Schnittstelle 12 vorgesehen. Diese Schnittstellen 11, 12 sind über ein Kabel 13 miteinander verbunden, welches zur Übertragung des Datensatzes D in Richtung des in der Fig. 1 dargestellten Pfeils dient.

Die Vorrichtung 10 ist geeignet, ein Verfahren zum Übertragen des Datensatzes D von der ersten an die zweite Einrichtung 1, 2 durchzuführen. Solch ein Verfahren ist in der Fig. 2 dargestellt, welche ein Verfahren zum Übertragen eines Datensatzes D von einer ersten an eine zweiten Einrichtung 1, 2 gemäß einer ersten Ausführungsform zeigt.

In einem Schritt S0 wird die in der Fig. 1 dargestellte Vorrichtung 10 bereitgestellt. In einem Schritt S1 wird der Datensatz D in der ersten Einrichtung 1 geschützt. Hierzu wird, wie zuvor beschrieben, die Schutzeinheit 7 eingesetzt, welche den Datensatz D anhand des vorbestimmten Authentisierungsgeheimnisses 8 und des vorbestimmten Vertraulichkeitsgeheimnisses 9 schützt.

In einem Schritt S2 erfolgt ein Übertragen des Datensatzes D von der ersten an die zweiten Einrichtung 1, 2. Der Schritt S2 ist insbesondere optional.

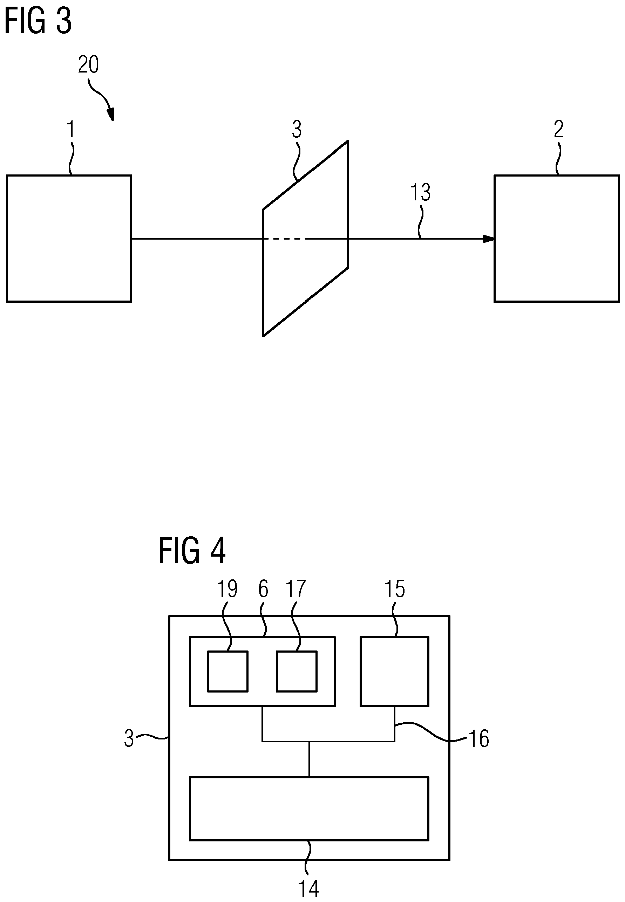

Die Fig. 3 zeigt eine Vorrichtung 20 zum Übertragen eines Datensatzes D von einer ersten an eine zweite Einrichtung 1, 2 gemäß einer zweiten Ausführungsform. In der Fig. 3 sind die erste und zweite Einrichtung 1, 2 vereinfacht dargestellt. Tatsächlich unterscheiden sie sich aber nicht von den ersten und zweiten Einrichtungen 1, 2, die in Bezug auf die Fig. 1 beschrieben wurden.

Die Vorrichtung 20 gemäß der zweiten Ausführungsform unterscheidet sich von der Vorrichtung 10 gemäß der ersten Ausführungsform dadurch, dass entlang des Kabels 13 zwischen der ersten und der zweiten Einrichtung 1, 2 eine dritte Einrichtung 3 angeordnet ist.

Die dritte Einrichtung 3 ist als ein Firewall ausgebildet und dient dazu, alle Datensätze D, die von der ersten Einrichtung 1 an die zweite Einrichtung 2 übertragen werden, abzufangen, zu lesen und im Hinblick auf Sicherheitskriterien bzw. Sicherheitsvoraussetzungen zu verifizieren.

Ein Beispiel für die dritte Einrichtung 3 ist in der Fig. 4 dargestellt. Die dritte Einrichtung 3 umfasst eine bidirektionale Schnittstelle 14, eine dritte Speichereinheit 6 und eine Kontrolleinheit 15. In der dritten Speichereinheit 6 sind Sicherheitsvoraussetzungen 17 sowie das zugehörige Vertraulichkeitsgeheimnis 19 gespeichert.

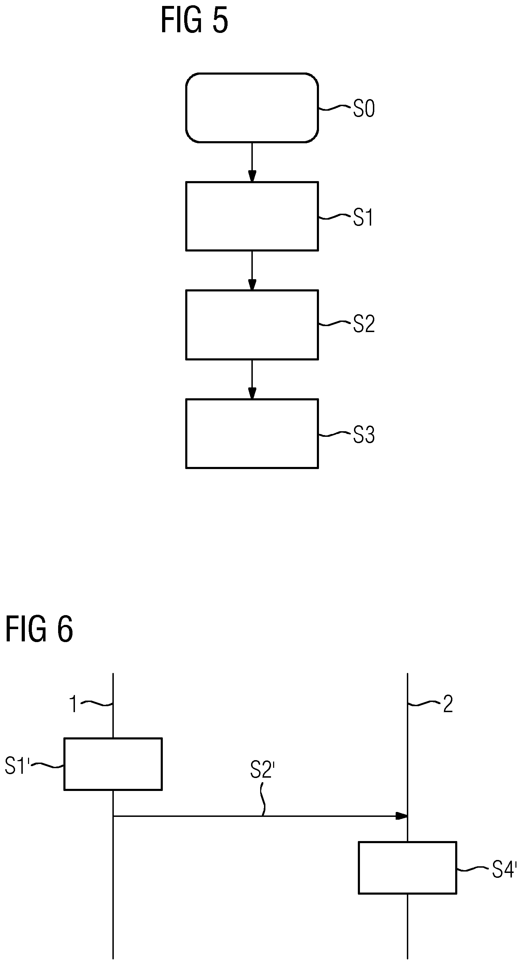

Die Vorrichtung 20 gemäß der zweiten Ausführungsform ist geeignet, ein Verfahren zum Übertragen des Datensatzes D von der ersten an die zweite Einrichtung 1, 2 durchzuführen. Solch ein Verfahren ist in der Fig. 5 dargestellt, welche ein Verfahren zum Übertragen eines Datensatzes D von einer ersten an eine zweiten Einrichtung 1, 2 gemäß einer zweiten Ausführungsform zeigt.

Das Verfahren gemäß der zweiten Ausführungsform (Fig. 5) unterscheidet sich von dem Verfahren gemäß der ersten Ausführungsform (Fig. 2) dadurch, dass es einen zusätzlichen Schritt S3 aufweist. Die Schritte S0, S1 und S2 bleiben identisch.

In dem zusätzlichen Schritt S3 wird der Datensatz D durch die dritte Einrichtung 3 gelesen. Hierbei wird der von der ersten an die zweite Einrichtung 1, 2 übertragene Datensatz D durch die bidirektionale Schnittstelle 14 abgefangen. Die Kontrolleinheit 15 entschlüsselt den geschützten Datensatz D, um dessen Inhalt zu entnehmen. Zum Entschlüsseln des geschützten Datensatzes D verwendet die Kontrolleinheit 15 das in der dritten Speichereinheit 6 gespeicherte zugehörige Vertraulichkeitsgeheimnis 19.

Anschließend überprüft die Kontrolleinheit 15 den Inhalt des Datensatzes D unter Berücksichtigung der Sicherheitsvoraussetzungen 17. Die Kontrolleinheit 15 kann z.B. bestimmen, dass der Inhalt des Datensatzes D den Sicherheitsvoraussetzungen 17 genügt, und gegebenenfalls den Datensatz D verschlüsselt über die Schnittstelle 14 an die zweite Einrichtung 2 weiterleiten. Falls die Kontrolleinheit 15 bestimmt, dass der Inhalt des Datensatzes D den Sicherheitsvoraussetzungen 17 nicht genügt, kann sie eine Warnmeldung ausgeben, und/oder den Datensatz markieren, und/oder den Datensatz blockieren. Wenn die Kontrolleinheit 15 ein blockierendes Prüfen des Datensatzes D realisiert, kann sie die Weiterleitung der Daten an die zweite Einrichtung 2 unterbinden. Die Warnung und das Blockieren können das unzulässige Senden von Informationen verhindern (Data Leakage Prevention).

Da die dritte Einrichtung 3 das zugehörige Authentisierungsgeheimnis 18 nicht aufweist, kann die dritte Einrichtung 3 nur eingeschränkt den Datensatz D verwenden. Die dritte Einrichtung 3 kann somit den Schutz der Authentizität und/oder Integrität des Datensatzes D nicht verändern. So kann die dritte Einrichtung 3 den Datensatz D zum Beispiel nicht ersetzen, weil sie dafür einen neuen Authentizität und/oder Integritätsschutz für den neuen (gefälschten) Datensatz bereitstellen müssten. Sie kann auch nicht einen Teil des Datensatzes D ändern, weil dieses die Authentizität und/oder Integrität des Datensatzes D kompromittieren würde.

Somit kann der Inhalt des Datensatzes D mit der dritten Einrichtung 3 überprüft werden, ohne dass die Sicherheit des Datensatzes hinsichtlich Integrität/Authentizität und/oder die Sicherheit der ersten und zweiten Einrichtungen 1, 2 geschädigt wird.

Die Fig. 6 zeigt ein Verfahren zum Übertragen eines Datensatzes D von einer ersten Einrichtung 1 an eine zweite Einrichtung 2 gemäß einer dritten Ausführungsform. Das Verfahren gemäß der dritten Ausführungsform kann zum Beispiel mit den Vorrichtungen 10, 20 der ersten oder zweiten Ausführungsform durchgeführt werden.

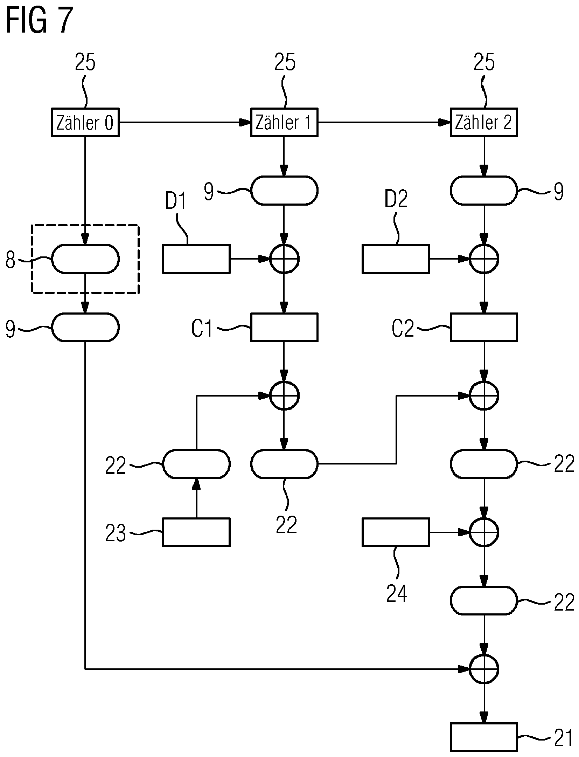

In einem Schritt S1' wird der Datensatz D in einem AE-Verfahren geschützt. Das AE-Verfahren ist hierbei ein modifiziertes Galois-Counter-Modus-Verfahren (GCM). Die Fig. 7 zeigt ein erstes Beispiel für solch ein modifiziertes GCM-Verfahren. Im Folgenden werden die Figuren 6 und 7 zusammen beschrieben.

Das modifizierte GCM-Verfahren ist ein Blockchiffreverfahren, in dem Blöcke D1, D2 des Datensatzes D einzeln verarbeitet und verschlüsselt werden. Die Verschlüsselung der Datensatzböcke D1, D2 erfolgt anhand des vorbestimmten Vertraulichkeitsgeheimnisses 9 (vgl. Zählerstände 1 und 2 eines Zählers 25 in der Fig. 7). Die verschlüsselten Datensatzteile D1, D2 bilden Ciphertextblöcke C1, C2. Die aneinander gesetzten Ciphertextblöcke C1, C2 bilden einen Ciphertext, der dem geschützten Datensatz D entspricht.

Anhand des GCM-Verfahrens wird zudem ein Authentifikations-Tag 21 erzeugt. In die Erzeugung des Authentifikations-Tags 21 fließen sowohl das vorbestimmte Vertraulichkeitsgeheimnis 9 als auch das vorbestimmte Authentisierungsgeheimnis 8 ein. Dieses ist aus dem linken Teil der Fig. 7 ersichtlich, in dem ein Zählerstand des Zählers 25 null ist.

In die Erzeugung des Authentifikations-Tags 21 fließen zudem die einzelnen Ciphertextblöcke C1, C2 ein, welche in dem GCM-Verfahren miteinander verknüpft werden. Dabei werden die Ciphertextblöcke C1, C2 anhand von Matrixmultiplikationen 22 miteinander verknüpft. Bei dem Zählerstand 1 des Zählers 25 werden zudem Initialisierungsdaten 23 bei der Verknüpfung berücksichtigt. Bei dem finalen Zählerstand (hier Zählerstand 2) des Zählers 25 wird ferner eine Konkatenation 24 einer Bitlänge der Initialisierungsdaten 23 mit einer Bitlänge des Ciphertexts bei der Verknüpfung berücksichtigt.

Das in der Fig. 7 dargestellte modifizierte GCM-Verfahren unterscheidet sich von einem bekannten GCM-Verfahren lediglich durch die in dem gestrichelten Rechteck dargestellten Aspekte, also dadurch, dass das vorbestimmte Authentisierungsgeheimnis 8 in die Bestimmung des Authentifikations-Tags 21 mit einfließt.

In einem Schritt S2' (Fig. 6) wird der geschützte Datensatz D als Ciphertext von der ersten Einrichtung 1 an die zweite Einrichtung 2 übertragen. Zusammen mit dem Datensatz D wird auch der in dem Schritt S1' bestimmte Authentifikations-Tag 21 von der ersten an die zweite Einrichtung 1, 2 übertragen.

In einem Schritt S4` prüft und entschlüsselt die zweite Einrichtung 2 den Datensatz D anhand des als Ciphertext empfangenen geschützten Datensatzes D. Hierzu verwendet die zweite Einrichtung 2 den Authentifikations-Tag 21, der ihr zusammen mit dem geschützten Datensatz D übermittelt wurde, sowie die in der zweiten Einrichtung 2 gespeicherten zugehörige Authentisierungs- und Vertraulichkeitsgeheimnisse 18, 19. Zum Ableiten des Datensatzes D verwendet die zweite Einrichtung 2 ein modifiziertes GCM-Ableitungsverfahren, welches im Wesentlichen dem beschriebenen modifizierten GCM-Verfahren entspricht, und für die Ableitung des Datensatzes D angepasst wurde.

Die zweite Einrichtung 2 überprüft in dem Schritt S4, ob der empfangene Authentifikations-Tag 21 tatsächlich anhand der vorbestimmten Authentisierungs- und Vertraulichkeitsgeheimnisse 8, 9 erzeugt wurde. Falls dieses der Fall ist, bestimmt die zweite Einrichtung 2, dass die Authentizität und/oder Integrität des Datensatzes D gegeben ist. Zum Entschlüsseln des empfangenen Datensatzes D verwendet die zweite Einrichtung 2 das zugehörige Vertraulichkeitsgeheimnis 19.

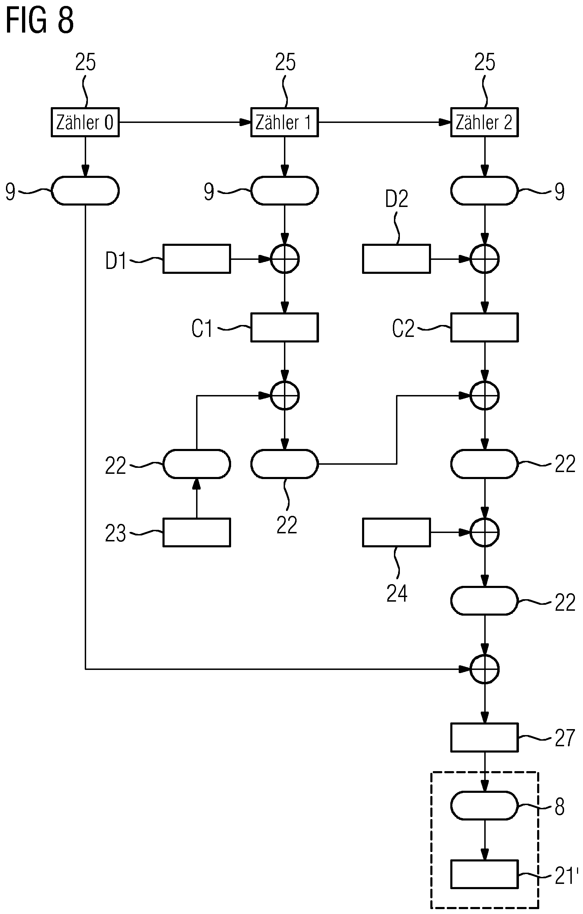

Anstelle des in der Fig. 7 dargestellten modifizierten GCM-Verfahrens können in den Schritten S1' und/oder S4' auch andere modifizierte GCM-Verfahren verwendet werden. Ein weiteres Beispiel für ein modifiziertes GCM-Verfahren ist in der Fig. 8 dargestellt.

Die Fig. 8 zeigt ein zweites Beispiel für ein modifiziertes GCM-Verfahren. Das GCM-Verfahren aus der Fig. 8 ist im Wesentlich analog zu dem anhand der Fig. 6 beschriebenen GCM-Verfahren. Allerdings wird ein Authentifikations-Tag 21' nicht direkt unter Berücksichtigung des vorbestimmten Authentisierungsgeheimnisses 8 erzeugt. Stattdessen wird zunächst, ohne das vorbestimmte Authentisierungsgeheimnis 8 zu berücksichtigen, ein Standardauthentifikations-Tag 21' erzeugt. Erst anschließend wird dieser Standardauthentifikations-Tag 27 durch eine Verknüpfung mit dem vorbestimmten Authentisierungsgeheimnis 8 verändert, wodurch ein modifizierter Authentifikations-Tag 21' erzeugt wird.

Das in der Fig. 8 dargestellte modifizierte GCM-Verfahren unterscheidet sich von einem bekannten GCM-Verfahren lediglich durch die in dem gestrichelten Rechteck dargestellten Aspekte, also dadurch, dass der Authentifikations-Tag 21' nach seiner Erzeugung noch unter Berücksichtigung des vorbestimmten Authentisierungsgeheimnisses 8 verändert wird, um den modifizierten Authentifikations-Tag 21" zu erzeugen.

Obwohl die vorliegende Erfindung anhand von Ausführungsbeispielen beschrieben wurde, ist sie vielfältig modifizierbar. Die erste, zweite und dritte Einrichtungen 1, 2, 3 können auch als Steuereinrichtungen oder Aktuatoren ausgebildet sein. Das Vertraulichkeitsgeheimnis 9 kann auch mit dem zugehörigen Vertraulichkeitsgeheimnis 19 ein asymmetrisches Schlüsselpaar bilden. Anstelle der beschriebenen GCM-Verfahren können als AE-Verfahren z.B. auch AES-CCM-Verfahren eingesetzt werden. Es ist auch denkbar, die beschriebenen GCM-Verfahren zu modifizieren. Zum Beispiel ist der Schutz des Authentifikations-Tags 21 durch das vorbestimmte Vertraulichkeitsgeheimnis 9 (Zählerstand 0) in dem in der Fig. 7 dargestellten GCM-Verfahren, fakultativ.

## Patentansprüche

1. Verfahren zum Übertragen eines Datensatzes (D) von einer ersten an eine zweite Einrichtung (1, 2), umfassend:
Schützen (S1, S1') des Datensatzes (D) in der ersten Einrichtung (1) anhand eines Authenticated-Encryption-Verfahrens, in welchem eine Authentizität und/oder Integrität des Datensatzes (D) anhand eines vorbestimmten Authentisierungsgeheimnisses (8) geschützt wird und in welchem eine Vertraulichkeit des Datensatzes (D) anhand eines vorbestimmten Vertraulichkeitsgeheimnisses (9) geschützt wird,
wobei das Schützen des Datensatzes (D) derart erfolgt, dass der geschützte Datensatz (D) nur durch eine Einrichtung, in der ein dem vorbestimmten Vertraulichkeitsgeheimnis (9) zugehöriges Vertraulichkeitsgeheimnis (19) gespeichert ist, lesbar ist, und dass ein Schutz der Authentizität und/oder Integrität des geschützten Datensatzes (D) nur durch eine Einrichtung, in der ein dem vorbestimmten Authentisierungsgeheimnis (8) zugehöriges Authentisierungsgeheimnis (18) gespeichert ist, veränderbar und/oder überprüfbar ist.

2. Verfahren nach Anspruch 1,
**gekennzeichnet durch**
Übertragen (S2, S2') des geschützten Datensatzes (D) von der ersten an die zweite Einrichtung (1, 2), wobei das zugehörige Vertraulichkeitsgeheimnis (19) und das zugehörige Authentisierungsgeheimnis (18) in der zweiten Einrichtung (2) gespeichert sind.

3. Verfahren nach Anspruch 1 oder 2,
**gekennzeichnet durch**
Lesen (S3) des Datensatzes (D) **durch** eine dritte Einrichtung (3), wobei das zugehörige Vertraulichkeitsgeheimnis (19) in der dritten Einrichtung (3) gespeichert ist, und wobei das zugehörige Authentisierungsgeheimnis (18) nicht in der dritten Einrichtung (3) gespeichert ist.

4. Verfahren nach einem der Ansprüche 1 - 3,
**dadurch gekennzeichnet,**
**dass** das vorbestimmte Authentisierungsgeheimnis (8) unabhängig von dem vorbestimmten Vertraulichkeitsgeheimnis (9) ist; dass das vorbestimmte Authentisierungsgeheimnis (8) und das vorbestimmte Vertraulichkeitsgeheimnis (9) von einem gemeinsamen Ausgangsgeheimnis abgeleitet werden;
**dass** das vorbestimmte Authentisierungsgeheimnis (8) von dem vorbestimmten Vertraulichkeitsgeheimnis (9) abgeleitet wird; und/oder
**dass** das vorbestimmte Authentisierungsgeheimnis (8) und das vorbestimmte Vertraulichkeitsgeheimnis (9) von zwei separaten Geheimnisvereinbarungsprotokollsitzungen vereinbart werden.

5. Verfahren nach einem der Ansprüche 1 bis 4,
**dadurch gekennzeichnet,**
**dass** das vorbestimmte Authentisierungsgeheimnis (8) und/oder das vorbestimmte Vertraulichkeitsgeheimnis (9) im Rahmen eines Authentisierungs- und Schlüsselvereinbarungsprotokolls zwischen der ersten und der zweiten Einrichtung (1, 2) eingerichtet werden, wobei das Schlüsselvereinbarungsprotokoll insbesondere ein TLS-Handschake und/oder ein IKEv2 (internet key exchange, Version 2) ist.

6. Verfahren nach einem der Ansprüche 1 bis 5,
**dadurch gekennzeichnet,**
**dass** das vorbestimmte Authentisierungsgeheimnis (8) und/oder das vorbestimmte Vertraulichkeitsgeheimnis (9) anhand einer Schlüsselableitungsfunktion, insbesondere anhand einer HMAC-SHA256-Funktion (Hash-based message authentication code) oder einer HKDF-Funktion (Hash key derivation function), bestimmt wird.

7. Verfahren nach einem der Ansprüche 1 - 6,
**dadurch gekennzeichnet,**
**dass** das Authenticated-Encryption-Verfahren ein GCM-Verfahren (Galois-Counter-Modus), ein AES-GCM- (advanced encryption standard Galois-Counter mode) oder ein AES-CCM-Verfahren (advanced encryption standard counter with CBC-MAC mode) ist.

8. Verfahren nach einem der Ansprüche 2 - 7,
**gekennzeichnet durch**
Bestimmen (S1`) eines Authentifikations-Tags (21, 21") durch die erste Einrichtung (1) mit Hilfe eines modifizierten GCM-Verfahrens, wobei das vorbestimmte Vertraulichkeitsgeheimnis (9) in dem modifizierten GCM-Verfahren verwendet wird, um den Datensatz (D) als Ciphertext zu verschlüsseln, und wobei der Authentifikations-Tag (21, 21") in dem modifizierten GCM-Verfahren mit dem vorbestimmten Authentisierungsgeheimnis (8) geschützt wird;
Übertragen (S2') des Authentifikations-Tags (21, 21") zusammen mit dem geschützten Datensatz (D) von der ersten Einrichtung (1) an die zweite Einrichtung (2);
Prüfen und Entschlüsseln (S4') des Datensatzes (D) ausgehend von dem Ciphertext **durch** die zweite Einrichtung (2) unter Berücksichtigung des Ciphertexts, des Authentifikations-Tags (21, 21"), des in der zweiten Einrichtung (2) gespeicherten zugehörigen Vertraulichkeitsgeheimnisses (19) und des in der zweiten Einrichtung gespeicherten zugehörigen Authentisierungsgeheimnisses (18).

9. Verfahren nach einem der Ansprüche 3 bis 8,
**dadurch gekennzeichnet,**
**dass** die dritte Einrichtung (3) als eine Firewall, ein IDS-System (intrusion detection system), ein Log-Server, ein zugelassenes Überwachungssystem und/oder ein virtueller Sensor zur Extraktion von Sensordaten aus dem Datensatz (D) ausgebildet ist.

10. Computerprogrammprodukt, welches auf einer programmgesteuerten Einrichtung die Durchführung des Verfahrens nach einem der Ansprüche 1 bis 9 veranlasst.

11. Vorrichtung zum Übertragen eines Datensatzes (D) von einer ersten an eine zweite Einrichtung (1, 2), umfassend:
eine Schutzeinheit zum Schützen des Datensatzes (D) in der ersten Einrichtung (1) anhand eines Authenticated-Encryption-Verfahrens, in welchem eine Authentizität und/oder Integrität des Datensatzes (D) anhand eines vorbestimmten Authentisierungsgeheimnisses (8) geschützt wird und in welchem eine Vertraulichkeit des Datensatzes (D) anhand eines Vertraulichkeitsgeheimnisses (9) geschützt wird,
wobei das Schützen des Datensatzes (D) derart erfolgt, dass der geschützte Datensatz (D) nur durch eine Einrichtung, in der ein dem vorbestimmten Vertraulichkeitsgeheimnis (9) zugehöriges Vertraulichkeitsgeheimnis (19) gespeichert ist, lesbar ist, und dass ein Schutz der Authentizität und/oder Integrität des geschützten Datensatzes (D) nur durch eine Einrichtung, in der ein dem vorbestimmten Authentisierungsgeheimnis (8) zugehöriges Authentisierungsgeheimnis (18) gespeichert ist, veränderbar und/oder überprüfbar ist.

12. Vorrichtung nach Anspruch 11, die eingerichtet ist, das Verfahren nach einem der Ansprüche 1 bis 9 durchzuführen.
